(19)

Europäisches Patentamt

European Patent Office

Office européen des brevets

(11)　**EP 4 214 339 B1**

(12)　**EUROPEAN PATENT SPECIFICATION**

(45) Date of publication and mention
　　 of the grant of the patent:
　　 **29.10.2025 Bulletin 2025/44**

(21) Application number: **20775422.7**

(22) Date of filing: **15.09.2020**

(51) International Patent Classification (IPC):
　　 *C21B 5/00* (2006.01)　　 *C21B 7/16* (2006.01)
　　 *C21B 7/06* (2006.01)　　 *F27B 1/14* (2006.01)
　　 *F27D 1/00* (2006.01)　　 *F27D 3/16* (2006.01)
　　 *C21B 5/06* (2006.01)　　 *F27B 1/16* (2006.01)

(52) Cooperative Patent Classification (CPC):
　　 **C21B 5/001; C21B 5/06; C21B 7/06; C21B 7/16;**
　　 **F27B 1/14; F27B 1/16; F27D 1/0003; F27D 3/16;**
　　 C21B 2005/005; C21C 2100/04; F27D 2003/168;
　　 Y02P 10/122

(86) International application number:
　　 **PCT/IB2020/058570**

(87) International publication number:
　　 **WO 2022/058774 (24.03.2022 Gazette 2022/12)**

(54) **BLAST FURNACE FOR IRONMAKING PRODUCTION**

　　 HOCHOFEN ZUR HERSTELLUNG VON EISEN

　　 HAUT-FOURNEAU POUR LA FABRICATION DU FER

(84) Designated Contracting States:
　　 **AL AT BE BG CH CY CZ DE DK EE ES FI FR GB**
　　 **GR HR HU IE IS IT LI LT LU LV MC MK MT NL NO**
　　 **PL PT RO RS SE SI SK SM TR**

(43) Date of publication of application:
　　 **26.07.2023 Bulletin 2023/30**

(73) Proprietor: **ArcelorMittal**
　　 **1160 Luxembourg (LU)**

(72) Inventors:
　　 • **IZARD, Edouard**
　　　 **57070 Saint Julien Les Metz (FR)**

　　 • **SERT, Dominique**
　　　 **57645 Montoy Flanville (FR)**

(74) Representative: **Lavoix**
　　　 **2, place d'Estienne d'Orves**
　　　 **75441 Paris Cedex 09 (FR)**

(56) References cited:
　　 EP-A1- 3 093 352　　　 GB-A- 1 317 826
　　 US-A- 3 547 624　　　 US-A- 6 129 776
　　 US-A1- 2005 027 493

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention is related to a blast furnace for ironmaking production.

In blast furnaces, the conversion of the iron-containing charge (sinter, pellets and iron ore) to cast iron is conventionally carried out by reduction of the iron oxides by a reducing gas (in particular containing CO, H2 and N2), which is formed by combustion of coke at the tuyeres located in the bottom part of the blast furnace where air preheated to a temperature between 1000° C and 1300° C, called hot blast, is injected. Patent documents EP 3 093 352 A1, US 6 129 776 A, US 3 547 624 A, GB 1 317 826 A and US 2005/027493 A1 further disclose a blast furnace for ironmaking production.

In order to increase the productivity and reduce the costs, auxiliary fuels are also injected at the tuyeres, such as coal in pulverized form, fuel oil, natural gas or other fuels, combined with oxygen enrichment of the hot blast.

The gas recovered in the upper part of the blast furnace, called top gas, mainly consists of CO, CO2, H2 and N2 in respective proportions of 20-28%v, 17-25%v, 1-5%v and 48-55%v. These gases are generally used in other parts of the plant as fuel and/or in a power plant for electricity production. Blast furnaces are therefore significant producers of CO2.

In view of the considerable increase in the concentration of CO2 in the atmosphere since the beginning of the last century and the subsequent greenhouse effect, it is essential to reduce emissions of CO2 where it is produced in a large quantity, and therefore in particular at blast furnaces.

For this purpose, during the last 50 years, the consumption of reducing agents in the blast furnace has been reduced by half so that, at present, in blast furnaces of conventional configuration, the consumption of carbon has reached a low limit linked to the laws of thermodynamics.

One known way of additionally reducing CO2 emissions is to reintroduce top gases that are purified of CO2 and that are rich in CO into the blast furnace. The use of CO-rich gas as a reducing agent thus makes it possible to reduce the coke consumption and therefore the CO2 emissions. This injection may be done at two levels, at the classical tuyere level, in replacement of hot blast and in the reduction zone of the blast furnace, for example near the shaft-belly corner of the blast furnace and above (lower stack of the blast furnace). This kind of blast furnace is notably known as Top Gas Recycling Blast Furnace (TGRBF).

The second level of injection does not currently exist in blast furnaces, a new level of injection has thus to be created and it must not detrimentally impair the working of the blast furnace. For example, the injection of reducing gas must not disturb the flow of matter inside the blast furnace which is key for the productivity.

There is a need for a blast furnace having a reduced environmental impact with same or improved level of productivity than prior art blast furnaces.

This problem is solved by a blast furnace according to the invention, as disclosed in appended claims 1-5.

The blast furnace of the invention may also comprise the following optional characteristics considered separately or according to all possible technical combinations:

- the blast furnace has a working height H and the reducing gas injection is performed at a height which is comprised between 20% and 70% of said working height **H,** starting from the tuyere level,
- the blast furnace has a working height H and the reducing gas injection is performed at a height which is comprised between 20% and 70% of said working height H, starting from the tuyere level.

The invention is also related to an ironmaking method performed in a blast furnace according to the previous embodiments wherein the reducing gas contains part of top gas exhausted from the blast furnace during the ironmaking process. Said method may also comprise the following optional characteristics considered separately or according to all possible technical combinations:

- the reducing gas is injected at a temperature comprised between 850°C and 1200°C,
- the reducing gas contains preferentially between 65%v and 75%v of carbon monoxide CO, between 8%v and 15%v of hydrogen H2, between 1%v and 5%v of carbon dioxide CO2, remainder being mainly nitrogen N2

Other characteristics and advantages of the invention will emerge clearly from the description of it that is given below by way of an indication and which is in no way restrictive, with reference to the appended figures in which:

- Figure 1 illustrates a side view of a blast furnace with reducing gas injection in the reduction zone
- Figure 2 illustrates an upper view of the blast furnace of figure 1
- Figure 3 illustrates a blast furnace according to an embodiment of the invention

Elements in the figures are illustration and may not have been drawn to scale.

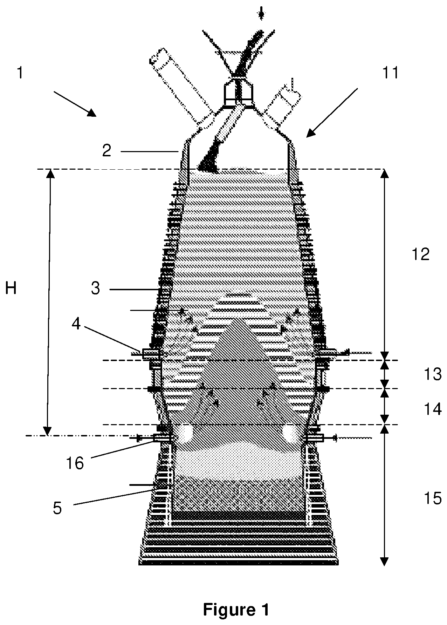

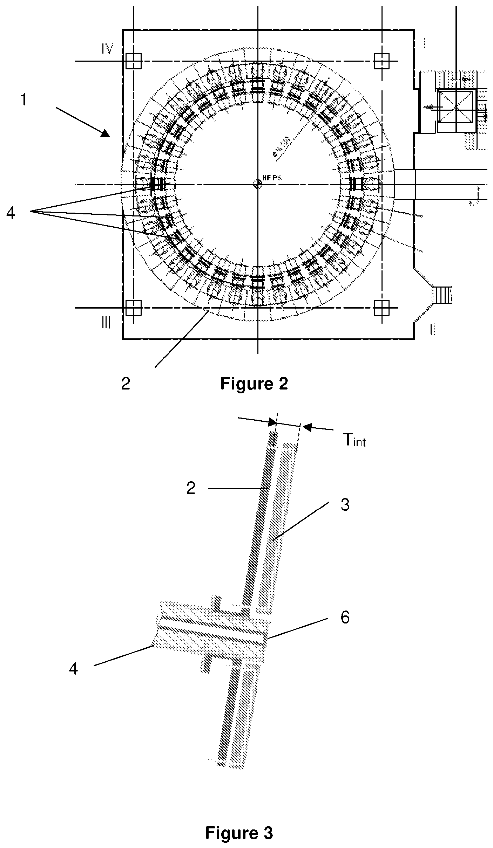

Figure 1 is a side view of a blast furnace according to the invention. The blast furnace 1, comprises, starting from the top, a throat 11 wherein materials are loaded and gas exhaust, a stack - or shaft - 12, a belly 13, a bosh 14 and a hearth 15. The materials loaded are mainly iron-bearing materials such as sinter, pellets or iron ore and carbon-bearing materials such as coke. The hot blast injection necessary to carbon combustion and thus iron reduction is performed by tuyeres 16 located between the bosh 14 and the hearth 15. In terms of structure, the blast furnace has an external wall, or shell 2, this shell 2 being covered, on the inside of the blast furnace, by a refractory lining and staves 3, as illustrated in figure 3, forming an internal wall 5. The blast furnace has an internal diameter $D_{int}$ which varies from the top to the bottom. To reduce consumption of coke, which is the main carbon provider for iron reduction, it has been envisaged to inject a reducing gas into the blast furnace in addition to the hot blast. This reducing gas injection is performed in the stack of the blast furnace, preferentially in the lower part of the stack.

In a preferred embodiment the reducing gas injection is performed at a height from the classical tuyere level corresponding to 20% and 70% of the working height H of the furnace. In a most preferred embodiment, the reducing gas injection is performed between 30% and 60% of the working height H of the furnace. The working height H of a blast furnace is the distance between the level of injection of hot blast through classical tuyeres and the zero level of charging, as illustrated in figure 1.

In a preferred embodiment the reducing gas which is introduced into the shaft furnace is top gas exhausted from said furnace which is subjected to gas treatment so as to remove dust and get appropriate composition, pressure and temperature. This reducing gas contains preferentially between 65%v and 75%v of carbon monoxide CO, between 8%v and 15%v of hydrogen H2, between 1%v and 5%v of carbon dioxide CO2, remainder being mainly nitrogen N2.

It is preferentially injected at a temperature comprised between 850 and 1200°C.

The injection is performed through several injection devices 4, provided with injection outlets 6, around the circumference of the furnace, as illustrated in figure 2, which is a top view of the blast furnace 1 at the level of injection of the reducing gas. In a preferred embodiment there are as many injection devices 4 as staves forming the internal wall 5. Between 200 and 700Nm$^3$ of reducing gas are injected per tons of hot metal in the blast furnace.

Figure 3 illustrates a side view of a blast furnace 1 according to an embodiment of the invention in an injection area. The injection device 4 is inserting into the blast furnace 1 by going through the shell 2 and the staves 3 forming the internal wall 5. The staves above and below the injection device have a thickness $T_{int}$ which is substantially constant and the injection outlet 6 is aligned with the internal wall 5. As staves are subjected to abrasion by the matters falling into the blast furnace their thickness can't be precisely known and controlled, by substantially constant it is thus meant that the variation of the thickness is inferior or equal to 2%. In a preferred embodiment the thickness $T_{int}$ of the internal wall is substantially constant over a height of at least 400mm above and at least 400mm below the injection outlet.

Moreover, according to the invention, the injection device 4 is designed so that the injection outlet 6 is aligned with the internal wall 5 and the reducing gas is injected at a speed inferior to 120m/s, and preferably below 100m/s. By doing so the reducing gas injection will not push over the matter falling into the blast furnace and thus not create any cavity which would impair the good distribution of the burden due to the formation of mixed layers of coke and iron-bearing materials and thus the productivity of the ironmaking process.

## Claims

1. A blast furnace 1 for ironmaking production wherein iron ore is at least partly reduced by a reducing gas which is injected in the stack 12 of the blast furnace, said blast furnace comprising:

   - an external wall 2 and an internal wall 5 in contact with matters charged into the blast furnace, said internal wall 5 having a thickness $T_{int}$,
   - an injection device 4 for injecting the reducing gas through an injection outlet 6 in an injection area,

   wherein

   - the thickness $T_{int}$ of the internal wall 5 is substantially constant over a height of at least 400mm above and at least 400mm below the injection area,
   - the injection outlet 6 is aligned with the internal wall,
   - the injection device 4 is able to inject the reducing gas at a speed inferior to 120m/s.

2. A blast furnace according to claim 1, wherein the blast furnace has a working height H defined as the distance between the level of injection of hot blast through classical tuyeres 16 and the zero level of charging and the reducing gas injection is performed at a height which is comprised between 20% and 70% of said working height H, starting from the tuyere 16 level.

3. An ironmaking method performed in a blast furnace according to anyone of claims 1 or 2 wherein the reducing gas contains part of top gas exhausted from the blast furnace during the ironmaking process.

4. An ironmaking method according to claim 3 wherein the reducing gas is injected at a temperature comprised between 850°C and 1200°C.

5. An ironmaking method according to claim 3 or 4 wherein the reducing gas has the following composition:

$$65\%v \leq CO \leq 75\%v$$

$$8\%v \leq H_2 \leq 15\%v$$

$$1\%v \leq CO_2 \leq 5\%v$$

remainder being $N_2$.

## Patentansprüche

1. Hochofen 1 zur Herstellung von Eisen, wobei Eisenerz zumindest teilweise durch ein Reduktionsgas reduziert wird, das in den Schornstein 12 des Hochofens eingeblasen wird, der Hochofen umfassend:

   - eine Außenwand 2 und eine Innenwand 5 in Kontakt mit Materialien, die in den Hochofen eingebracht werden, wobei die Innenwand 5 eine Stärke $T_{int}$ aufweist,
   - eine Einblasvorrichtung 4 zum Einblasen des Reduktionsgases durch einen Einblasauslass 6 in einen Einblasbereich,

   wobei

   - die Stärke $T_{int}$ der Innenwand 5 über eine Höhe von mindestens 400 mm oberhalb und mindestens 400 mm unterhalb des Einblasbereichs im Wesentlichen konstant ist,
   - der Einblasauslass 6 mit der Innenwand ausgerichtet ist,
   - die Einblasvorrichtung 4 in der Lage ist, das Reduktionsgas mit einer Geschwindigkeit von weniger als 120 m/s einzublasen.

2. Hochofen nach Anspruch 1, wobei der Hochofen eine Arbeitshöhe H aufweist, die als der Abstand zwischen der Ebene des Einblasens von Heißwind durch die klassischen Blasdüsen 16 und der Ebene null der Beschickung definiert ist, und das Einblasen von Reduktionsgas auf einer Höhe durchgeführt wird, die zwischen 20 % und 70 % der Arbeitshöhe H, ausgehend von der Ebene der Blasdüse 16, ist.

3. Verfahren zur Herstellung von Eisen in einem Hochofen nach einem der Ansprüche 1 oder 2, wobei das Reduktionsgas einen Teil des Gichtgases enthält, das während des Eisenherstellungsprozesses aus dem Hochofen ausgestoßen wird.

4. Verfahren zur Herstellung von Eisen nach Anspruch 3, wobei das Reduktionsgas bei einer Temperatur zwischen 850 °C und 1200 °C eingeblasen wird.

5. Verfahren zur Herstellung von Eisen nach Anspruch 3 oder 4, wobei das Reduktionsgas die folgende Zusammensetzung aufweist:

$$65\ \% \ \text{Vol.} \leq CO \leq 75\ \% \ \text{Vol.}$$

$$8\ \% \ \text{Vol.} \leq H_2 \leq 15\ \% \ \text{Vol.}$$

$$1\ \% \ \text{Vol.} \leq CO_2 \leq 5\ \% \ \text{Vol.}$$

wobei der Rest $N_2$ ist.

## Revendications

1. Haut-fourneau 1 pour la fabrication de fer dans lequel du minerai de fer est au moins partiellement réduit par un gaz réducteur qui est injecté dans la cuve 12 du haut-fourneau, ledit haut-fourneau comprenant :

   - une paroi externe 2 et une paroi interne 5 en contact avec des matières chargées dans le haut-fourneau, ladite paroi interne (5) ayant une épaisseur $T_{int}$,
   - un dispositif d'injection 4 pour l'injection du gaz réducteur à travers une sortie d'injection 6 dans une zone d'injection,

   dans lequel

   - l'épaisseur $T_{int}$ de la paroi interne 5 est sensiblement constante sur une hauteur d'au moins 400 mm au-dessus de la zone d'injection et d'au moins 400 mm au-dessous de celle-ci,
   - la sortie d'injection 6 est alignée avec la paroi interne,
   - le dispositif d'injection 4 est apte à injecter le gaz réducteur à une vitesse inférieure à 120 m/s.

2. Haut-fourneau selon la revendication 1, dans lequel le haut-fourneau a une hauteur de travail H définie comme la distance entre le niveau d'injection de vent chaud à travers des tuyères traditionnelles 16 et le niveau zéro de chargement et l'injection de gaz réducteur est réalisée à une hauteur qui est comprise entre 20 % et 70 % de ladite hauteur de travail H, en partant du niveau de la tuyère 16.

3. Procédé de fabrication de fer réalisé dans un haut-fourneau selon l'une quelconque des revendications 1 ou 2 dans lequel le gaz réducteur contient une partie du gaz de gueulard rejeté par le haut-fourneau au cours du processus de fabrication de fer.

4. Procédé de fabrication de fer selon la revendication 3 dans lequel le gaz réducteur est injecté à une température comprise entre 850 °C et 1200 °C.

5. Procédé de fabrication de fer selon la revendication 3 ou 4 dans lequel le gaz réducteur a la composition suivante :

65 % en volume ≤ CO ≤ 75 % en volume

8 % en volume ≤ $H_2$ ≤ 15 % en volume

1 % en volume ≤ $CO_2$ ≤ 5 % en volume

le reste étant du $N_2$.

**Figure 1**

**Figure 2**

**Figure 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3093352 A1
- US 6129776 A
- US 3547624 A
- GB 1317826 A
- US 2005027493 A1